# EUROPEAN PATENT SPECIFICATION

(11) **EP 4 568 932 B1**
(45) Date of publication and mention of the grant of the patent: **15.07.2026**
(21) Application number: 23751948.3
(22) Date of filing: 03.08.2023
(51) Int. Cl.: C02F 3/00, C02F 3/34, C02F 3/28, C02F 101/34, C02F 103/36

(54) **PROCESS FOR THE DEGRADATION OF ONE OR MORE HYDROCARBONS**
VERFAHREN ZUM ABBAU EINES ODER MEHRERER KOHLENWASSERSTOFFE
PROCÉDÉ DE DÉGRADATION D'UN OU PLUSIEURS HYDROCARBURES

(30) Priority: 09.08.2022 NL 2032701
(43) Date of publication of application: 18.06.2025
(73) Proprietor: Paqell B.V., 3542 AD Utrecht (NL)
(72) Inventor: LIU, Dandan, 6707 JB Wageningen (NL); DE RINK, Frederikus, 3814 SH Amersfoort (NL); KLOK, Johannes Bernardus Maria, 3911 CK Rhenen (NL)
(74) Representative: Cramwinckel, Michiel
(86) International application number: PCT/EP2023/071507
(87) International publication number: WO 2024/033207

(56) References cited:
- US-A1- 2019 112 212
- WANG DEXIN ET AL: "Enhanced treatment of Fischer-Tropsch wastewater using up-flow anaerobic sludge blanket system coupled with micro-electrolysis cell: A pilot scale study", BIORESOURCE TECHNOLOGY, ELSEVIER, AMSTERDAM, NL, vol. 238, 20 April 2017 (2017-04-20), pages 333 - 342, XP085037223, ISSN: 0960-8524, DOI: 10.1016/J.BIORTECH.2017.04.056
- ZENG XIAOFEI ET AL: "Biotransformation of Furanic and Phenolic Compounds with Hydrogen Gas Production in a Microbial Electrolysis Cell", ENVIRONMENTAL SCIENCE & TECHNOLOGY, vol. 49, no. 22, 9 November 2015 (2015-11-09), US, pages 13667 - 13675, XP093032737, ISSN: 0013-936X, DOI: 10.1021/acs.est.5b02313
- HUANG QI ET AL: "A critical review of microbial electrolysis cells coupled with anaerobic digester for enhanced biomethane recovery from high-strength feedstocks", CRITICAL REVIEWS IN ENVIRONMENTAL SCIENCE AND TECHNOLOGY, vol. 52, no. 1, 18 September 2020 (2020-09-18), pages 50 - 89, XP093032693, ISSN: 1064-3389, DOI: 10.1080/10643389.2020.1813065

## Description

The invention is directed to a process for the degradation of one or more hydrocarbons as present in an aqueous solution, wherein the one or more hydrocarbons are at least one of phenol, methyl phenyl ketone and methyl phenyl carbinol.

Such an aqueous solution may be the wastewater of a chemical process. Because phenol, methyl phenyl ketone and methyl phenyl carbinol are known to be toxic for the organisms which are typically present in anaerobic digestion process it is not possible to treat such an aqueous solution in such a typical wastewater treatment process. For this reason such aqueous solutions are typically subjected to a so called Wet Air Oxidation process. This is a very energy intensive process and there is a need to replace this procedure with a less energy intensive process.

GB2262052 describes a process where such an aqueous solution is subjected to a freeze-concentration obtaining a concentrated waste product, salt crystals and a substantially pure water product. A disadvantage of this process is that it remains to be energy intensive. A next disadvantage is that the hydrocarbons, and especially one of phenol, methyl phenyl ketone and methyl phenyl carbinol, are not degraded to other compounds. Thus the problem of how to dispose of one or more of these compounds remains.

Document US 2019/112212 discloses a process for degrading hydrocarbons taking place in a series of bio-electrochemical cells, wherein the voltage applied in each bio-electrochemical cell is different. The COD of the feed solution can be 2 g/L.

The aim of the present process is to provide an improved process for the degradation of one or more of phenol, methyl phenyl ketone and methyl phenyl carbinol as present in an aqueous solution in terms of energy efficiency and applicability.

This is achieved with a process according to claim 1.

Applicants found that with this process phenol, methyl phenyl ketone and methyl phenyl carbinol as present in an aqueous solution can be continuously degraded to other products. The treated aqueous solution may have a chemical oxygen demand (COD) low enough that the aqueous solution can be discharged to the environment. Further the content of the toxic components like phenol, methyl phenyl ketone and methyl phenyl carbinol may be reduced such that the aqueous solution can be successfully further treated in a conventional anaerobic wastewater treatment process where methane is formed. The amount of energy required to run this process is substantially less than the described prior art processes and the less desired phenol, methyl phenyl ketone and methyl phenyl carbinol can be effectively removed.

The invention shall be described in more detail below.

The aqueous feed solution comprises at least one of phenol, methyl phenyl ketone and methyl phenyl carbinol. The aqueous feed solution may further comprise methanol, 1-propanol, mono propylene glycol and/or benzaldehyde. The aqueous feed solution may contain between 1 and 3.5 wt% of non-salt organics and between 3 and 6 wt% organic salts. In addition up to 2 wt% of sodium carbonate and sodium bicarbonate and/or traces of sodium hydroxide may be present.

The aqueous feed solution has a chemical oxygen demand (COD) of between 50 and 120 g/L. Applicant found that a lower COD enhances the degradation of the compounds. The COD is lowered by dilution to obtain COD levels below 50 g/L. Dilution may be achieved by adding water, preferably tap water. The aqueous feed solution may also be diluted with a recycle stream of the process when the degradation takes place in the bio-electrochemical cell. The recycle may be part of the treated aqueous solution. The recycle stream may be collected in a buffer vessel to which vessel both the recycle stream as well as the starting aqueous feed solution is supplied. By adding more or less recycle stream the above cited COD levels in the resulting aqueous feed solution may be controlled and achieved.

The pH of the aqueous feed solution is between 8 and 10.

The above described aqueous feed solution is preferably a waste water stream of a chemical process such as described in the earlier referred to GB2262052.

The culture of microorganisms is suitably obtained from an anaerobically grown culture. Suitably the mixed culture comprises electroactive bacteria for example *Geobacter* species, phenol degradation bacteria, for example *Desulfovibrio, Acinetobacter* species, fermentative bacteria, for example *Clostridium* and *Acetobactrium* species and methanogens, for example *Methanobacterium* species.

The culture microorganisms is preferably obtained from an anaerobic system, such as an anaerobically grown culture. A preferred anaerobically grown culture is obtained from an existing bioelectrochemical system, fed with hydrocarbons, for example phenolic compounds. The mixed culture may be obtained from the sludge of an anaerobic bioreactor, such as an anaerobic fermenter, for example one used for anaerobic chain elongation; an anaerobic digestion reactor, for example an upflow anaerobic sludge blanket reactor (UASB); Other suitable bioreactors for providing the sludge are expended granular sludge bed (EGSB), a sequential batch reactor (SBR), a continuously stirred tank reactor (CSTR) or an anaerobic membrane bioreactor (AnMBR). In the present context, the term sludge refers to the semi-solid flocs or granules containing a mixed culture of microorganisms.

It has been found that the process is able to operate satisfactory when starting from a mixed culture microorganisms as obtained from only an anaerobic system. In order to further enhance the bioactivity at the anode, aerobic bacteria may be added to the mixed culture microorganisms. Such aerobic bacteria may be obtained from an activated sludge.

The degradation takes place in a bio-electrochemical cell comprising the culture of microorganisms, an anode and a cathode. The culture of microorganisms may suitably be present as a combination of a biofilm and a suspension. The suspended microorganisms may be present on a suspended carrier. The anode will be present in an anode compartment and the cathode will be present in a cathode compartment. The bio-electrochemical cell may be any bio-electrochemical cell where the anode and cathode are in contact with the aqueous feed solution. An unobstructed transport of protons and of degradation products as formed at the anode is possible from the anode to the cathode.

Therefore no membrane is present between the anode compartment and the cathode compartment. A bio-electrochemical cell not having membranes is advantageous because it simplifies the bio-electrochemical cell and its use. For example membrane fouling maintenance will then not be required. A membrane may be present present in a non-claimed embodiment to avoid side reactions, for example oxygen reduction at the cathode under micro-aerophilic condition. A membrane will avoid significant amounts of oxygen reaching the cathode.

The microbial community which will develop at the anode and at the cathode will be different because the electro/chemical reactions are different on anode and cathode electrode. On the anode more fermentative and heterotrophic bacteria with the ability of electro activity may be present. On the cathode the afore mentioned hydrogenotrophic methanogens and bacteria which can use electrons to reduce organic compounds may be present.

The anode may be made from carbon-based and metal based conductive materials. Suitable carbon-based conductive materials are carbon fiber, graphite felt, graphite rod or granular activated carbon (GAC). A suitable metal based conductive material is titanium, for example present as a titanium mesh and/or as a titanium plate.

The cathode may be made from carbon-based conductive materials, the same as those mentioned above as anode. Suitable carbon-based conductive materials are carbon fiber, graphite felt, graphite rod or granular activated carbon (GAC).

The temperature at which the process is performed is preferably between 10 and 35 °C. The process may be performed under pressure. Preferably the process is performed at ambient or near ambient conditions.

The cell voltage is preferably between 1.0 to 5.0 V.

At the cathode or in the cathode compartment it is preferred to operate the process such that no or very minimal amounts of molecular oxygen is present. At the anode or anode compartment the presence of oxygen is not detrimental for the desired conversions and oxygen may even enhance the desired conversion. Optionally an oxygen containing gas, such as air may thus be supplied to the anode compartment to increase the oxygen content at the anode.

The bio-electrochemical cell may be operated as a batch reactor or a semi-batch wherein for example a stream of gaseous oxygen is continuously fed to the anode compartment and wherein formed methane and other gaseous products are continuously discharged from the reactor. In such a batch operated process the applied cell voltage may vary in time during the batch operation. The cell voltage in the batch operated bio-electrochemical cell linked may be between 1.0 to 5.0 V wherein 1.0 V is the lower range limit and 5.0 V is the higher range limit. During the batch operation the cell voltage is suitably lowered from a starting cell voltage to a lower cell voltage. Preferably the cell voltage is controlled by measuring the conversion of any one of the compounds as present in the aqueous feed solution and/or the production of methane and adapting the cell voltage in response to the measured conversion and/or production. Preferably the conversion of phenol, methyl phenyl ketone and/or methyl phenyl carbinol is measured.

The bio-electrochemical cell is operated continuously. In such a continuously operated process it is preferred that the aqueous feed solution is fed to the cathodic compartment. The process is performed in a series of two or more continuously operated bio-electrochemical cells thereby defining at least one upstream bio-electrochemical cell and one downstream bio-electrochemical cell. The applied cell voltage in each bio-electrochemical cell is different. The cell voltage in the bio-electrochemical cells linked in series is between 1.0 to 5.0 V wherein 1.0 V is the lower range limit and 5.0 V is the higher range limit. The cell voltage in the upstream cell is higher than the cell voltage in the downstream cell.

The process is found to be very effective in degrading especially phenol, methyl phenyl ketone and methyl phenyl carbinol. When the aqueous feed solution also comprises other hydrocarbon compounds it is possible to also convert these compounds with the present process and thereby lowering the chemical oxygen demand (COD) of the aqueous solution. These other hydrocarbon compounds may be compounds known to be effectively treated by conventional water treatment techniques, like an anaerobic water treatment process. These hydrocarbon compounds may be fatty acids, such as acetate propionate and butyrate. These compounds are referred to as easy degradable COD. Applicant found that the present process can be operated such that phenol, methyl phenyl ketone and methyl phenyl carbinol are selectively degraded to obtain an aqueous intermediate product solution containing these easy degradable COD. The aqueous intermediate product is preferably further treated by conventional water treatment processes, like an anaerobic water treatment process, to lower the COD to a desired discharge standard level. In this way the more complex process in the bio-electrochemical cell can be designed and operated to mainly degrade the difficult compounds while in a state-of-the-art conventional water treatment, like an anaerobic water treatment process, the easy degradable COD is converted.

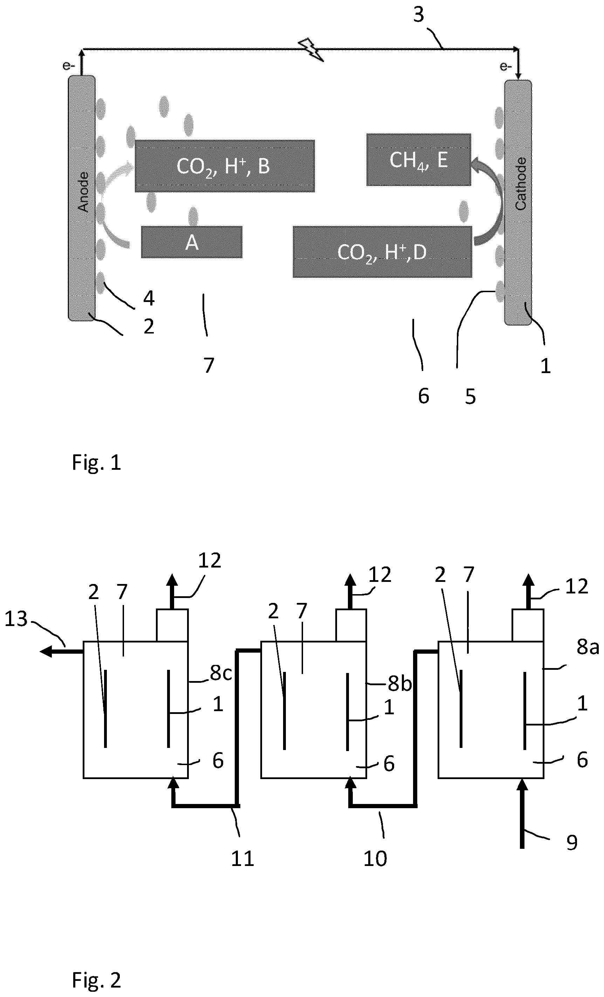

The invention shall be illustrated by the following Figures. Figure 1 shows a cathode (1) and an anode (2) schematically contacted (3) such that a cell voltage can be applied. At the anode (2) compounds such as phenol, methyl phenyl ketone and/or methyl phenyl carbinol referred to as (A) as present in an aqueous solution are converted to carbon dioxide, protons and to compounds (B) which are more easily degradable in a conventional water treatment process. This conversion takes place in the presence of a mixed culture of microorganisms (4). The protons, carbon dioxide and or compounds (D) are converted at the cathode, in the presence of a mixed culture of microorganisms (5), to methane and more reduced compounds (E). The cathode is present in a cathode compartment (6) and the anode is present in an anode compartment (7). These cathode compartment (6) and anode compartment (7) are in essence the volume of aqueous solution around the respective cathode (1) and anode (2). The compartments (6,7) are fluidly in contact and no obstruction is present between the compartments. Thus no clear border can be identified.

In Figure 2 three continuously operated bio-electrochemical cells (8a,8b,8c) in series are shown. Each bio-electrochemical cell (8a,8b,8c) is provided with a cathode (1) and an anode (2) arranged as shown in Figure 1. An upstream bio-electrochemical cell (8a) and a downstream bio-electrochemical cell (8c) is shown. To the cathode compartment (6) of upstream bio-electrochemical cell (8a) an aqueous feed solution (9), wherein the one or more hydrocarbons are at least one of phenol, methyl phenyl ketone and methyl phenyl carbinol, is supplied. From the anode compartment (7) of upstream bio-electrochemical cell (8a) an intermediate aqueous solution (10) is discharged and supplied to the cathode compartment (6) of the next bio-electrochemical cell (8b) in the series of bio-electrochemical cells (8a,8b,8c). In bio-electrochemical cell (8b) any non converted phenol, methyl phenyl ketone and methyl phenyl carbinol is converted at its anode (2) and methane is formed at its cathode (2). From the anode compartment (7) of bio-electrochemical cell (8b) a second intermediate aqueous solution (11) is discharged and supplied to the cathode compartment (6) of the next bio-electrochemical cell (8c) in the series of bio-electrochemical cells (8a,8b,8c). In bio-electrochemical cell (8c) any non converted phenol, methyl phenyl ketone and methyl phenyl carbinol is converted at its anode (2) and methane is formed at its cathode (2). This may be repeated in further bio-electrochemical cells (not shown) until the desired reduction in phenol, methyl phenyl ketone and/or methyl phenyl carbinol is achieved. From the downstream bio-electrochemical cell (8c) a treated aqueous solution (13) is discharged from its anode compartment (7). From each of the bio-electrochemical cells (8a,8b,8c) the formed methane (12) is discharged. The applied cell voltage in bio-electrochemical cell (8a) is higher than the cell voltage in bio-electrochemical cell (8b). The applied cell voltage in bio-electrochemical cell (8b) is higher than the cell voltage in bio-electrochemical cell (8c).

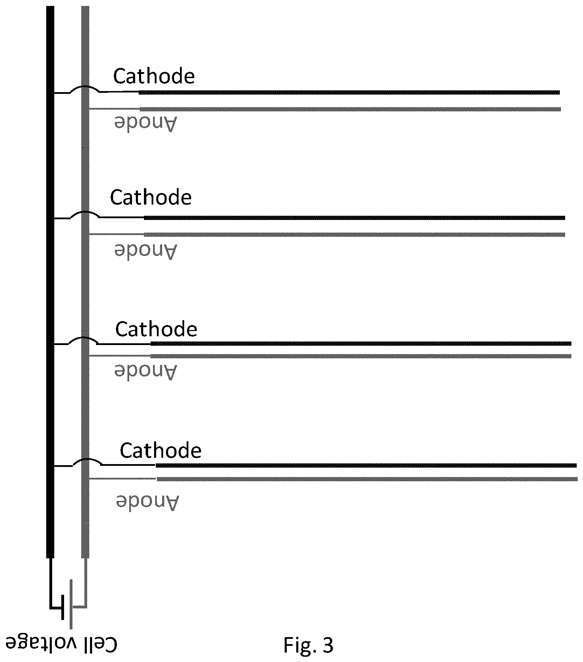

Figure 3 shows a possible bio-electrochemical cell having an unobstructed design in a very schematic manner. The cell does not have an obstructed flow because no membranes are for example present.

### Example 1

A bio-electrochemical cell was inoculated with a mixed culture of microorganisms from anaerobic granular sludge of an anaerobic digestion process in Eerbeek, The Netherlands. An aqueous feed solution comprising detectable amounts of phenol, methyl phenyl ketone, methyl phenyl carbinol, methanol, 1-propanol, 1,2 propanediol and benzaldehyde and having a chemical oxygen demand (COD) of 109 g/L, a pH of 9.5 and a conductivity of 43.2 mS/cm, was diluted by adding tap water in an amount of 1.5 times the volume of the aqueous solution to obtain a diluted aqueous solution having an initial COD of about 40 g/L.

The diluted aqueous solution is added to the batch bio-electrochemical cell. A cell voltage between the anode and cathode was applied such that electrons are transported from anode to cathode. The cell voltage between the anode and cathode was maintained at 3 V. After 20 days of operation the diluted solution was further diluted by adding a volume of tap water equal to the volume of the diluted aqueous solution to the bio-electrochemical cell to obtain a further diluted aqueous solution inside the cell.

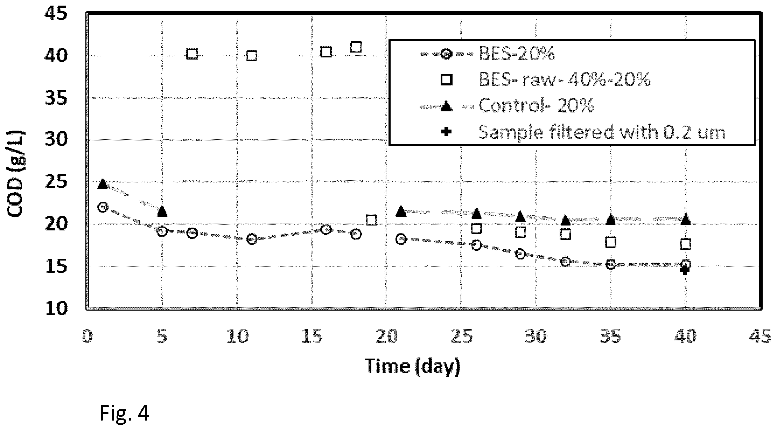

Over time the pH stabilised to a range of between 8 and 8.5. The reduction in COD in the aqueous solution in the cell is measured as represented as the open square with the legend of 'BES raw-40%-20%' in Figure 4. Only after the dilution at day 20 a reduction of COD was observed.

### Example 2

Example 1 was repeated except that the starting aqueous solution was diluted by adding tap water in an amount of 4 times the volume of the aqueous solution to obtain a diluted aqueous solution having an initial COD of about 25 g/L.

At the anode a carbon dioxide rich gas was formed and at the cathode a methane rich gas was formed. The reduction in COD in the aqueous solution in the cell is measured as represented as the open circle with the legend of 'BES-20%' in Figure 4. Analysis after 40 days showed that most of the so-called toxic hydrocarbons are converted. Phenol was converted for 85%, methyl phenyl carbinol was converted for 98% and methyl phenyl ketone was converted for 82%.

At day 20, the COD of the aqueous solution in the cell was measured after filtration with a 0.2 µm filter. The COD was not changed compared to the sample without filtration. This result indicated that the COD measured within the aqueous solution were not attributed to the biomass or other insoluble substances (particle size > 0.2 µm) and soluble organic compounds was thought to mainly contribute to the COD measured in this aqueous solution.

### Comparative Experiment

Example 2 was repeated except no potential between the anode and cathode was applied. The COD of the aqueous solution in the cell was measured as represented as the filled triangle with the legend of Control-20% in Figure 4. After an initial reduction the COD level remained constant at just above 20 g/L.

The batch experiments showed that at high COD levels the degradation of the hydrocarbons does not take place. When the initial COD was lowered by dilution, degradation started to take place. In a continuously operated bio-electrochemical cell (BES) the COD in the cell and thus around the anode and cathode will typically be equal or near to the resulting COD of the aqueous solution which is continuously discharged as the treated aqueous solution. To such a continuously operated bio-electrochemical cell (BES) aqueous solutions may be continuously fed having a high COD without running the risk that the desired degradation of the hydrocarbons does not take place. Preferably an aqueous solution is continuously discharged as an intermediate aqueous solution from each cell of the series of the two or more continuously operated bio-electrochemical cells to a downstream cell of the series or as a treated aqueous solution from the most downstream bio-electrochemical cell and wherein the oxygen demand (COD) of the intermediate aqueous solution or of the treated aqueous solution is below 30 g/L, more preferably below 25 g/L.

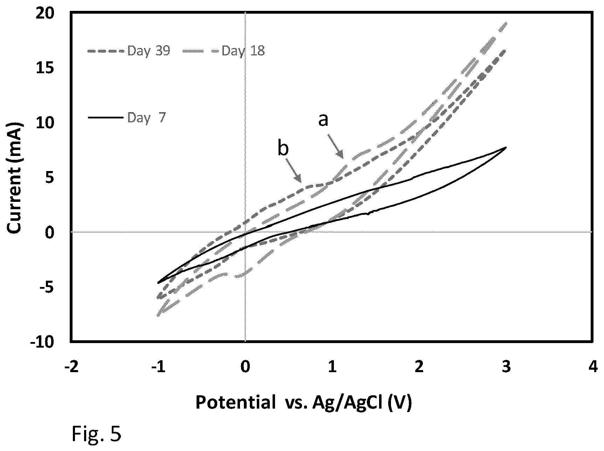

Cyclic voltammetry is the most widely used electrochemical technique for acquiring qualitative information about electrochemical reactions. It provides a rapid analyse of redox potentials of the electroactive species in the aqueous solution. During the operation of Example 2 cyclic voltammetry was performed for the anode electrode at Day 7,18 and 39. The results are shown in Figure 5. Two oxidation peaks can be found at 1.5 V on Day 18 ('a' in Figure 5) and 0.8 V on Day 39 ('b' in Figure 5), respectively. However, no oxidation peak is observed on Day 7. The Cyclic voltammetry results at the different run days in this batch experiment show that the optimal potential required becomes lower during the experiment.

As a result of this cyclic voltammetry, different cell voltage is preferably applied when the process is performed in a series of two or more continuously operated bio-electrochemical cells. Even more preferably the cell voltage in the upstream cell of the series of continuously operated bio-electrochemical cells is higher than the cell voltage in the downstream cell of the series.

## Claims

1. Process for the degradation of one or more hydrocarbons as present in an aqueous feed solution, wherein the one or more hydrocarbons are at least one of phenol, methyl phenyl ketone and methyl phenyl carbinol,
wherein the pH of the aqueous feed solution is between 8 and 10 and has a chemical oxygen demand (COD) of between 50 and 120 g/L,
wherein the chemical oxygen demand (COD) of the aqueous feed solution is lowered to below 50 g/L by dilution,
wherein the degradation takes place in a bio-electrochemical cell comprising a culture of microorganisms, an anode and a cathode,
applying a cell voltage between the anode and cathode such that electrons are transported from anode to cathode,
wherein the one or more hydrocarbons are converted at the anode whereby carbon dioxide, protons and degradation products are formed, and wherein at the cathode carbon dioxide and the degradation products are reacted with the protons to methane to obtain a treated aqueous solution having a reduced content of the one or more hydrocarbons, wherein the anode and cathode are contacted with the aqueous feed solution having the chemical oxygen demand (COD) of below 50 g/L a and wherein an unobstructed transport of protons and degradation products is possible between anode and cathode,
and
wherein the degradation takes place in a series of two or more continuously operated bio-electrochemical cells thereby defining at least one upstream bio-electrochemical cell and one downstream bio-electrochemical cell and wherein the applied cell voltage in each bio-electrochemical cell is different.

2. Process according to claim 1, wherein the culture of microorganisms is a mixed culture of microorganisms obtained from an anaerobically grown culture.

3. Process according to claim 2, wherein the anaerobically grown culture is a sludge of an anaerobic bioreactor.

4. Process according to claim 3, wherein the anaerobic bioreactor is an upflow anaerobic sludge blanket reactor (UASB).

5. Process according to any one of claims 2-4, wherein the anaerobically grown culture is obtained from a municipal wastewater treatment plant.

6. A process according to any one of claims 1-5, wherein the cell voltage is between 1.0 to 5.0 V.

7. A process according to claim 6, wherein the cell voltage is between 1.0 to 5.0 V wherein 1.0 V is the lower range limit and 5.0 V is the higher range limit and wherein the cell voltage in the upstream cell is higher than the cell voltage in the downstream cell.

8. A process according to any one of claims 1-7, wherein an aqueous solution is continuously discharged as an intermediate aqueous solution from each cell of the series of two or more continuously operated bio-electrochemical cells to a downstream cell or as a treated aqueous solution from the most downstream bio-electrochemical cell and wherein the chemical oxygen demand (COD) of the intermediate aqueous solution or of the treated aqueous solution is below 30 g/L.

9. A process according to any one of claims 1-8, wherein the aqueous feed solution is diluted with a recycle stream of the process when the degradation takes place in the bio-electrochemical cell.

10. A process according to any one of claims 1-9, wherein the aqueous feed solution comprises phenol, methyl phenyl ketone and methyl phenyl carbinol.

11. A process according claim 10, wherein the aqueous feed solution further comprises methanol, 1-propanol, mono propylene glycol and/or benzaldehyde.

12. A process according to any one of claims 1-11, wherein the treated aqueous solution comprises degradation products and wherein the degradation products are converted to methane in a separate anaerobic water treatment process.

13. A process according to any one of claims 1-12, wherein the aqueous feed solution contains between 1 and 3.5 wt% of non-salt organics and between 3 and 6 wt% organic salts.

14. A process according to claim 13, wherein the aqueous feed solution contains up to 2 wt% of sodium carbonate and sodium bicarbonate.

15. A process according to any one of claims 1-14, wherein of the aqueous feed solution is lowered to below 50 g/L by dilution with part of the treated aqueous solution.

## Patentansprüche

1. Verfahren zum Abbau eines oder mehrerer Kohlenwasserstoffe, wie sie in einer wässrigen Ausgangslösung vorliegen, wobei es sich bei dem einen oder den mehreren Kohlenwasserstoffen um mindestens eines der folgenden handelt: Phenol, Methylphenylketon und Methylphenylcarbinol,
wobei der pH-Wert der wässrigen Ausgangslösung zwischen 8 und 10 liegt und der chemische Sauerstoffbedarf (CSB) zwischen 50 und 120 g/l beträgt,
wobei der chemische Sauerstoffbedarf (CSB) der wässrigen Ausgangslösung durch Verdünnung auf unter 50 g/l gesenkt wird,
wobei der Abbau in einer bioelektrochemischen Zelle stattfindet, die eine Kultur von Mikroorganismen, eine Anode und eine Kathode umfasst,
wobei eine Zellspannung zwischen Anode und Kathode angelegt wird, sodass Elektronen von der Anode zur Kathode transportiert werden,
wobei der eine oder die mehreren Kohlenwasserstoffe an der Anode umgewandelt werden, wodurch Kohlendioxid, Protonen und Abbauprodukte entstehen, und wobei an der Kathode Kohlendioxid und die Abbauprodukte mit den Protonen zu Methan umgesetzt werden, um eine behandelte wässrige Lösung mit einem reduzierten Gehalt an dem einen oder den mehreren Kohlenwasserstoffen zu gewinnen, wobei die Anode und die Kathode mit der wässrigen Ausgangslösung mit einem chemischen Sauerstoffbedarf (CSB) von unter 50 g/l in Kontakt gebracht werden und wobei ein ungehinderter Transport von Protonen und Abbauprodukten zwischen Anode und Kathode möglich ist, und
wobei der Abbau in einer Reihe von zwei oder mehr kontinuierlich betriebenen bioelektrochemischen Zellen stattfindet, wodurch mindestens eine vorgelagerte bioelektrochemische Zelle und eine nachgelagerte bioelektrochemische Zelle definiert werden, und wobei die angelegte Zellspannung in jeder bioelektrochemischen Zelle unterschiedlich ist.

2. Verfahren nach Anspruch 1, wobei die Mikroorganismenkultur eine Mischkultur von Mikroorganismen ist, die aus einer anaerob gezüchteten Kultur gewonnen wird.

3. Verfahren nach Anspruch 2, wobei die anaerob gezüchtete Kultur ein Schlamm aus einem anaeroben Bioreaktor ist.

4. Verfahren nach Anspruch 3, wobei der anaerobe Bioreaktor ein Upflow-Anaerob-Schlammbettreaktor (UASB) ist.

5. Verfahren nach einem der Ansprüche 2 bis 4, wobei die anaerob gezüchtete Kultur aus einer kommunalen Kläranlage gewonnen wird.

6. Verfahren nach einem der Ansprüche 1 bis 5, wobei die Zellspannung zwischen 1,0 und 5,0 V liegt.

7. Verfahren nach Anspruch 6, wobei die Zellspannung zwischen 1,0 und 5,0 V liegt, wobei 1,0 V die untere Bereichsgrenze und 5,0 V die obere Bereichsgrenze ist und wobei die Zellspannung in der vorgelagerten Zelle höher ist als die Zellspannung in der nachgelagerten Zelle.

8. Verfahren nach einem der Ansprüche 1 bis 7, wobei eine wässrige Lösung kontinuierlich als wässrige Zwischenlösung aus jeder Zelle der Reihe von zwei oder mehr kontinuierlich betriebenen bioelektrochemischen Zellen in eine nachgelagerte Zelle oder als behandelte wässrige Lösung aus der am weitesten nachgelagerten bioelektrochemischen Zelle abgeleitet wird und wobei der chemische Sauerstoffbedarf (CSB) der wässrigen Zwischenlösung oder der behandelten wässrigen Lösung unter 30 g/l liegt.

9. Verfahren nach einem der Ansprüche 1 bis 8, wobei die wässrige Ausgangslösung mit einem Rückführstrom des Verfahrens verdünnt wird, wenn der Abbau in der bioelektrochemischen Zelle stattfindet.

10. Verfahren nach einem der Ansprüche 1 bis 9, wobei die wässrige Ausgangslösung Phenol, Methylphenylketon und Methylphenylcarbinol umfasst.

11. Verfahren nach Anspruch 10, wobei die wässrige Ausgangslösung ferner Methanol, 1-Propanol, Monopropylenglykol und/oder Benzaldehyd umfasst.

12. Verfahren nach einem der Ansprüche 1 bis 11, wobei die behandelte wässrige Lösung Abbauprodukte umfasst und wobei die Abbauprodukte in einem separaten anaeroben Wasseraufbereitungsprozess in Methan umgewandelt werden.

13. Verfahren nach einem der Ansprüche 1 bis 12, wobei die wässrige Ausgangslösung zwischen 1 und 3,5 Gew.-% nicht-salzhaltige organische Stoffe und zwischen 3 und 6 Gew.-% organische Salze enthält.

14. Verfahren nach Anspruch 13, wobei die wässrige Ausgangslösung bis zu 2 Gew.-% Natriumcarbonat und Natriumbicarbonat enthält.

15. Verfahren nach einem der Ansprüche 1 bis 14, wobei der wässrigen Ausgangslösung durch Verdünnung mit einem Teil der behandelten wässrigen Lösung auf unter 50 g/l gesenkt wird.

## Revendications

1. Procédé de dégradation d'un ou plusieurs hydrocarbures présents dans une solution aqueuse d'alimentation, dans lequel les un ou plusieurs hydrocarbures sont au moins l'un parmi un phénol, une méthylphénylcétone et un méthylphénylcarbinol,
dans lequel le pH de la solution aqueuse d'alimentation est compris entre 8 et 10 et présente une demande chimique en oxygène (DCO) comprise entre 50 et 120 g/l,
dans lequel la demande chimique en oxygène (DCO) de la solution aqueuse d'alimentation est abaissée à moins de 50 g/l par dilution,
dans lequel la dégradation se déroule dans une cellule bioélectrochimique comprenant une culture de micro-organismes, une anode et une cathode,
en appliquant une tension de cellule entre l'anode et la cathode de sorte que des électrons sont transportés de l'anode vers la cathode,
dans lequel les un ou plusieurs hydrocarbures sont convertis au niveau de l'anode, ce qui entraîne la formation de dioxyde de carbone, de protons et de produits de dégradation, et dans lequel, au niveau de la cathode, le dioxyde de carbone et les produits de dégradation réagissent avec les protons pour former du méthane, afin d'obtenir une solution aqueuse traitée présentant une teneur réduite en les un ou plusieurs hydrocarbures, dans lequel l'anode et la cathode sont en contact avec la solution aqueuse d'alimentation qui présente la demande chimique en oxygène (DCO) inférieure à 50 g/l, et dans lequel un transport sans obstruction des protons et des produits de dégradation est possible entre l'anode et la cathode,
et
dans lequel la dégradation se déroule dans une série de deux ou plus de deux cellules bioélectrochimiques fonctionnant en continu, définissant ainsi au moins une cellule bioélectrochimique en amont et une cellule bioélectrochimique en aval et dans lequel la tension de cellule appliquée dans chaque cellule bioélectrochimique est différente.

2. Procédé selon la revendication 1, dans lequel la culture de micro-organismes est une culture mixte de micro-organismes obtenue à partir d'une culture cultivée en anaérobiose.

3. Procédé selon la revendication 2, dans lequel la culture cultivée en anaérobiose est une boue d'un bioréacteur anaérobie.

4. Procédé selon la revendication 3, dans lequel le bioréacteur anaérobie est un réacteur anaérobie à lit de boues à flux ascendant (UASB pour « Upflow Anaerobic Sludge Blanket »).

5. Procédé selon l'une quelconque des revendications 2 à 4, dans lequel la culture cultivée en anaérobiose est obtenue à partir d'une station d'épuration des eaux usées communale.

6. Procédé selon l'une quelconque des revendications 1 à 5, dans lequel la tension de cellule est comprise entre 1,0 et 5,0 V.

7. Procédé selon la revendication 6, dans lequel la tension de cellule est comprise entre 1,0 et 5,0 V, 1,0 V étant la limite inférieure et 5,0 V étant la limite supérieure, et dans lequel la tension de cellule dans la cellule en amont est supérieure à la tension de cellule dans la cellule en aval.

8. Procédé selon l'une quelconque des revendications 1 à 7, dans lequel une solution aqueuse est déchargée en continu en tant que solution aqueuse intermédiaire depuis chaque cellule de la série de deux ou plus de deux cellules bioélectrochimiques fonctionnant en continu vers une cellule en aval ou en tant que solution aqueuse traitée depuis la cellule bioélectrochimique la plus en aval et dans lequel la demande chimique en oxygène (DCO) de la solution aqueuse intermédiaire ou de la solution aqueuse traitée est inférieure à 30 g/l.

9. Procédé selon l'une quelconque des revendications 1 à 8, dans lequel la solution aqueuse d'alimentation est diluée avec un flux de recyclage du procédé lorsque la dégradation se déroule dans la cellule bioélectrochimique.

10. Procédé selon l'une quelconque des revendications 1 à 9, dans lequel la solution aqueuse d'alimentation comprend du phénol, de la méthylphénylcétone et du méthylphénylcarbinol.

11. Procédé selon la revendication 10, dans lequel la solution aqueuse d'alimentation comprend en outre du méthanol, du 1-propanol, du monopropylèneglycol et/ou du benzaldéhyde.

12. Procédé selon l'une quelconque des revendications 1 à 11, dans lequel la solution aqueuse traitée comprend des produits de dégradation et dans lequel les produits de dégradation sont convertis en méthane dans un procédé de traitement de l'eau anaérobie distinct.

13. Procédé selon l'une quelconque des revendications 1 à 12, dans lequel la solution aqueuse d'alimentation contient entre 1 et 3,5 % en poids de composés organiques ne consistant pas en sels et entre 3 et 6 % en poids de sels organiques.

14. Procédé selon la revendication 13, dans lequel la solution aqueuse d'alimentation contient jusqu'à 2 % en poids de carbonate de sodium et de bicarbonate de sodium.

15. Procédé selon l'une quelconque des revendications 1 à 14, dans lequel de la solution aqueuse d'alimentation est abaissée à moins de 50 g/l par dilution avec une partie de la solution aqueuse traitée.
